Europäisches Patentamt

European Patent Office

Office européen des brevets

(11) Veröffentlichungsnummer: **0 301 282**
A1

## (12) EUROPÄISCHE PATENTANMELDUNG

(21) Anmeldenummer: 88110768.4

(22) Anmeldetag: 06.07.88

(51) Int. Cl.4: **H04L 27/02 , H04L 25/30**

(30) Priorität: 31.07.87 CH 2951/87

(43) Veröffentlichungstag der Anmeldung:
01.02.89 Patentblatt 89/05

(84) Benannte Vertragsstaaten:
AT BE CH DE FR GB LI NL SE

(71) Anmelder: **BBC Brown Boveri
Aktiengesellschaft**

**CH-5401 Baden(CH)**

(72) Erfinder: **Dzung, Dacfey, Dr.
Büntenstrasse 25
CH-8116 Würenlos(CH)**

(54) **Signalübertragungsverfahren.**

(57) Ein Signalübertragungsverfahren nach dem Prinzip der Quadratur-Amplituden-Modulation, bei welchem in einem Sender (4) digitale Daten, welche in einem zeitlichen Abstand T auftreten, mit Hilfe von Pulsformern (3a, 3b), welche eine gegebene Stossantwort r(t) haben, zu einem Sendesignal geformt werden, das Sendesignal mittels einer Trägerschwingung über einen Kanal (5) mit einer Kanalstossantwort h(t) übertragen und dabei von einem additiven, weissen Rauschen w(t) überlagert wird, so dass bei einem Empfänger (10) ein Empfangssignal y(t) vorliegt, und bei welchem das Empfangssignal y(t) im Empfänger (10) von kanalangepassten Fitern (7a, 7b) vorverarbeitet wird, hat kanalangepasste Filter (7a, 7b), welche an eine von Pulsformern (3a, 3b) und Kanal (5) gebildete Filterkaskade H(t) als Ganze angepasst sind. Vorzugsweise sind die kanalangepassten Filter (7a, 7b) Transversalfilter, deren Stützstellen in einem zeitlichen Abstand ΔT stehen, welcher klein ist im Verhältnis zum zeitlichen Abstand T der digitalen Daten. Eine Schätzung der Kanalstossantwort h(t) wird ermittelt, indem die Stossantwort der Filterkaskade H(t) mit einem Impulsformer inversen Filter $r^{-1}(t)$ gefaltet wird.

FIG.1

EP 0 301 282 A1

## SIGNALÜBERTRAGUNGSVERFAHREN

### TECHNISCHES GEBIET

Die Erfindung betrifft ein Signalübertragungsverfahren nach dem Prinzip der Quadratur-Amplituden-Modulation, bei welchem in einem Sender digitale Daten, welche in einem zeitlichen Abstand T auftreten, mit Hilfe von Pulsformern, welche eine gegebene Stossantwort r(t) haben, zu einem Sendesignal geformt werden, das Sendesignal mittels einer Trägerschwingung über einen Kanal mit einer Kanalstossantwort h(t) übertragen und dabei von einem additiven, weissen Rauschen w(t) überlagert wird, so dass bei einem Empfänger ein Empfangssignal y(t) vorliegt, und das Empfangssignal y(t) im Empfänger von kanalangepassten Filtern vorverarbeitet wird.

### STAND DER TECHNIK

Im Zuge der Digitalisierung von Mobilfunkgeräten kommt robusten digitalen Signalübertragungsverfahren eine zentrale Bedeutung zu. Diese lassen sich in mehrere Klassen einteilen. An dieser Stelle soll speziell das Verfahren der Quadratur-Amplituden-Modulation (QAM) betrachtet werden. Die Grundprinzipien von solchen Verfahren sind z.B. im Buch von J.G. Proakis, "Digital Communications", New York, McGraw-Hill, 1983 ausführlich beschrieben.

Ein Problem, das gelöst werden muss, um ein solches Signalübertragungsverfahren realisieren zu können, ist die Identifikation des Kanals, über welchen Signale von einem Sender zu einem Empfänger übertragen werden. Die Qualität einer solchen Identifikation, auch Schätzung genannt, bestimmt wesentlich, wie fehlerfrei ein Empfänger arbeiten kann. Insbesondere bei Mobilfunksystemen ändert sich der Kanal mit der Zeit, so dass es nicht möglich ist den Kanal ein für allemal zu identifizieren. Vielmehr ist es nötig, im Signalübertragungsverfahren ein Verfahren einzubetten, welches von Zeit zu Zeit den Kanal neu schätzt. Solche Verfahren werden in der Literatur unter dem Titel der Systemidentifikation behandelt und werden z.B. im Buch von P.Eykhoff, "System Identification, Parameter and State Estimation", London, Wiley, 1974 ausführlich beschrieben.

Ueblicherweise werden Kanäle von grosser Länge behandelt, d.h. Kanäle, deren Stossantwort langsam abklingt im Vergleich zu einer durch den zeitlichen Abstand der im Sender auftretenden Daten gegebenen Zeitdauer. Dabei wird der Kanal nur mit grober Auflösung bestimmt. Es hat sich nun aber gezeigt, dass es für eine optimale Detektion der gesendeten Daten im Empfänger von Bedeutung ist, auch kurze Kanäle mit guter Auflösung zu schätzen. Als Beispiel sei der einfache Fall eines Kanals mit einem schnellen, kurzen Echo genannt. In solchen Fällen versagen die bekannten Methoden allerdings, die numerischen Verfahren werden instabil.

### DARSTELLUNG DER ERFINDUNG

Aufgabe der Erfindung ist es, ein Signalübertragungsverfahren nach dem Prinzip der Quadratur-Amplituden-Modulation zu schaffen, bei welchem in einem Sender digitale Daten, welche in einem zeitlichen Abstand T auftreten, mit Hilfe von Pulsformern, welche eine gegebene Stossantwort r(t) haben, zu einem Sendesignal geformt werden, das Sendeisgnal mittels einer Trägerschwingung über einen Kanal mit einer Kanalstossantwort h(t) übertragen und dabei von einem additiven, weissen Rauschen w(t) überlagert wird, so dass bei einem Empfänger ein Empfangssignal y(t) vorliegt und das Empfangssignal y(t) im Empfänger von kanalangepassten Filtern vorverarbeitet wird, und bei welchem eine Schätzung des Kanals mit grosser Auflösung möglich ist.

Die Lösung der Aufgabe besteht darin, dass die kanalangepassten Filter an eine von Pulsformern und Kanal gebildete Filterkaskade H(t) als Ganze angepasst sind.

Der Kern der Erfindung liegt somit darin, dass nicht der Kanal h(t) für sich geschätzt wird, sondern nur die von Pulsformer und Kanal zusammen gebildete Filterkaskade H(t). Wendet man die bekannten, numerischen Verfahren auf diese Filterkaskade H(t) an, so treten die numerischen Instabilitäten nicht mehr auf.

Insbesondere ist zu bemerken, dass die Instabilitäten auch dann nicht auftreten, wenn, um die Stossantwort h(t) des Kanals selbst zu erhalten, die geschätzte Filterkaskade H(t) mit einem zum Pulsformer inversen Filter $r^{-1}(t)$ gefaltet wird.

Aus den Unteransprüchen gehen bevorzugte Ausführungsformen der Erfindung hervor.

## KURZE BESCHREIBUNG DER ZEICHNUNG

Nachfolgend soll die Erfindung unter Brücksichtigung des mathematischen Hintergrundes und im Zusammenhang mit der Zeichnung anhand von Ausführungsbeispielen näher erläutert werden. Es zeigen:

Fig. 1 Blockschaltbild eines Signalübertragungsverfahrens,

Fig. 2 Darstellung einer Stossantwort eines beispielhaften Kanals,

Fig. 3 Darstellung einer erfindungsgemäss geschätzten Stossantwort dieses Kanals und

Fig. 4 Darstellung einer nach einem bekannten Verfahrengeschätzten Stossantwort dieses Kanals.

## WEGE ZUR AUSFÜHRUNG DER ERFINDUNG

Anhand eines Ausführungsbeispiels soll die Erfindung näher beschrieben werden.

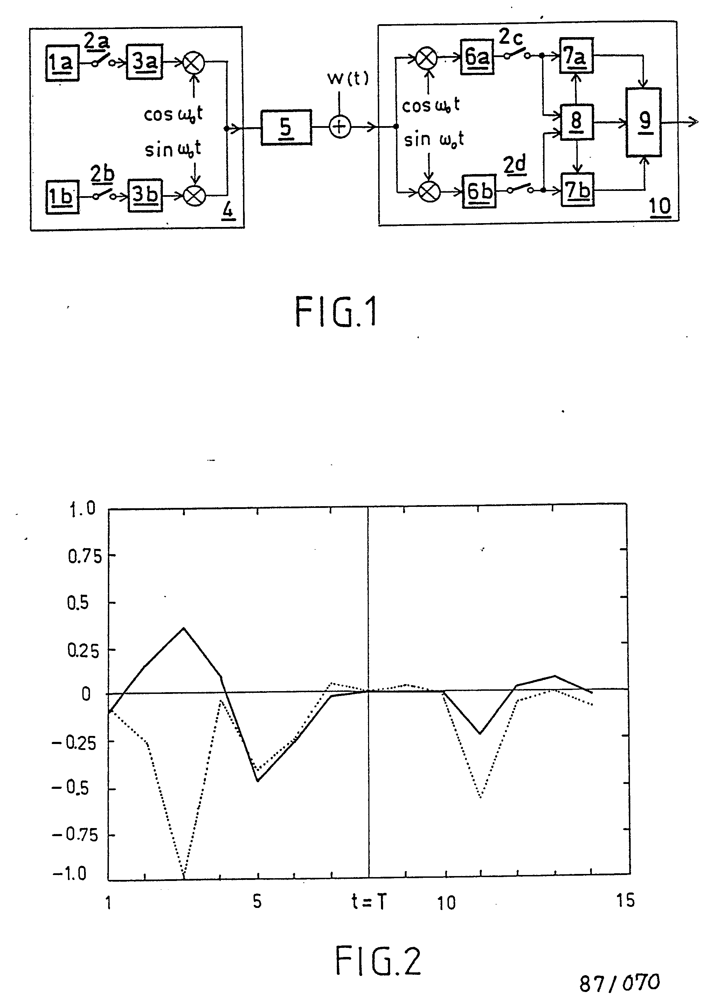

Fig. 1 zeigt ein Blockschaltbild eines erfindungsgemässen Signalübertragungsverfahrens. Wie bereits gesagt, handelt es sich dabei um ein Quadratur-Amplituden-Modulations-Verfahren. Eine Datenquelle 1a liefert digitale Daten in einem zeitlichen Abstand T. Eine Abtastvorrichtung 2a gibt diese Daten zu periodischen Zeitpunkten kT (k bezeichnet eine ganze Zahl) an einen Pulsformer 3a weiter. Das aus dem Pulsformer 3a tretende Signal moduliert auf bekannte Art eine Trägerschwingung $\cos(\omega_0 t)$, in der Figur durch ein Multiplikationszeichen angedeutet.

In analoger Weise wird eine Trägerschwingung $\sin(\omega_0 t)$ moduliert, wobei eine Datenquelle 1b, eine Abtastvorrichtung 2b und ein Pulsformer 3b benützt werden. Die beiden in Quadratur zueinander stehenden, modulierten Trägerschwingungen werden zusammengeführt und bilden ein Ausgangssignal eines Senders 4.

Ein Empfänger 10 empfängt das über einen Kanal 5 übertragene und dabei von einem additiven, weissen Rauschen w(t) überlagerte Ausgangssignal des Senders 4. Ein auf diese Weise entstandenes Eingangssignal wird ebenfalls in bekannter Weise in zwei Signalzweige aufgespalten. Die Demodulation der beiden Zweige ist in Fig. 1 angetönt durch eine Multiplikation mit $\cos(\omega_0 t)$ resp. $\sin(\omega_0 t)$ und durch ein nachgeschaltetes Tiefpassfilter 6a resp. 6b.

Abtastvorrichtungen 2c, 2d tasten die so erhaltenen Signale in zeitlichen Abständen $\Delta$ T ab. Die getasteten Werte des Eingangssignals werden von kanalangepassten Filtern 7a, 7b vorverarbeitet, und danach werden in einer Auswerteschaltung 9 die ursprünglichen Daten ermittelt.

Ein Kanalschätzer 8 steuert aufgrund der von den Abtastvorrichtungen 2c, 2d gelieferten Werte die kanalangepassten Filter 7a, 7b und die Auswerteschaltung 9.

Die Funktionsweise des Kanalschätzers 8, in welcher die Erfindung zum Tragen kommt, soll nachfolgend unter besonderer Berücksichtigung des mathematischen Hintergrundes ausführlich beschrieben werden.

In einer komplexen Schreibweise können die beiden aus den Pulsformern 3a, 3b austretenden Signale zu einem Sendesignal v(t) und die beiden aus den Tiefpassfiltern 6a, 6b austretenden Signale zu einem Empfangssignal y(t) zusammengefasst werden. (Das Sendesignal wird oft als Basisbandsignal bezeichnet.) Das Sendesignal v(t) nimmt folgende Form an:

$$v(t) = \sum_{k=-\infty}^{\infty} c_k r(t-kT) = c * r(t) \qquad (I)$$

wobei

$$c(t) = \sum_{k=-\infty}^{\infty} c_k \delta(t-kT) \qquad (II)$$

$r(t)$ ist die Stossantwort der Pulsformer 3a, 3b. $c_k$ bezeichnet einen komplexen Datenkoeffizient, welcher die Daten beinhaltet, welche zu einem bestimmten Zeitpunkt $kT$ von den Datenquellen 1a, 1b geliefert werden. $c(t)$ bezeichnet eine zeitkontinuierliche Darstellung der Datenkoeffizienten $c_k$, wobei $\delta(t)$ für einen Diracstoss steht. "*" steht für das Faltungsprodukt.

Durch die Uebertragung über den Kanal 5, dessen Stossantwort $h(t)$ ist, wird das Sendesignal transformiert und von einem weissen Rauschen $w(t)$ überlagert. Im Empfänger 10 liegt demzufolge nach der Demodulation ein Empfangssignal $y(t)$ der Form

$$y(t) = h*v(t) + w(t) \qquad (III)$$

vor.

Die Stossantwort $h(t)$ des Kanals 5 soll nun nach dem Prinzip der kleinsten Fehlerquadrate geschätzt werden, d.h. die Summe der Quadrate der Abweichungen zwischen einem unverrauscht übertragenen Sendesignal $h*v(t)$ und Empfangssignal $y(t)$ soll minimal sein:

$$\underset{h}{\text{Min}} \sum_{k=0}^{P} \left| y(k\Delta T) - h*v(k\Delta T) \right|^2 \qquad (IV)$$

Erfindungsgemäss wird nun nicht die Stossantwort $h(t)$ des Kanals 5 für sich, sondern nur die durch Pulsformer und Kanal gebildete Filterkaskade $H(t)$ als Ganze geschätzt, d.h.

$$J = \underset{H}{\text{Min}} \sum_{k=0}^{P} \left| y(k\Delta T) - H*c(k\Delta T) \right|^2 \qquad (V)$$

wobei

$$H(t) = h*r(t) \qquad (VI)$$

Die Lösung dieser Extremalwertaufgabe ist mit bekannten, numerischen Methoden berechenbar. Im wesentlichen geht es dabei darum, ein lineares Gleichungssystem der Form

$$r_{yc}(l) = \sum_{i=0}^{L_c} R_{cc}(l,i) \hat{H}(i) \qquad l = 0 \ldots L_c \qquad (VII)$$

$$\text{mit} \quad r_{yc}(l) = \sum_{k=0}^{P} c_{k-l} \bar{y}_k \qquad (VIII)$$

$$R_{cc}(l,i) = \sum_{k=0}^{P} c_{k-l} \bar{c}_{k-i} \qquad (IX)$$

("$\bar{\phantom{x}}$" bedeuten komplex konjugiert)

nach Koeffizienten $\hat{H}(i)$ aufzulösen.

Um die Stabilität einer numerischen Lösung eines linearen Gleichungssytems beurteilen zu können, ist es üblich, eine Konditionszahl $\mu(R_{cc})$ anzugeben. Vereinfacht gesagt, ist diese ein Mass dafür, wie stark sich numerische Ungenauigkeiten eines Vektors $r_{yc}(l)$ auf die gesuchten Koeffizienten $\hat{H}(i)$ auswirken. Falls die Datenkoeffizienten $c_k$ zufällig verteilt sind, ist ein Signal $c(t)$ gemäss Formel (II) weiss. $R_{cc}$ wird dann ungefähr proportional zu einer Einheitsmatrix. Die Konditionszahl $\mu(R_{cc})$ ist in diesem Fall näherungsweise 1, d.h. numerische Ungenauigkeiten werden nicht verstärkt, das Gleichungssystem ist somit gut konditioniert. Diese vorteilhafte Eigenschaft ist ein Hauptmerkmal der Erfindung.

Der Kanalschätzer 8 enthält eine Rechenschaltung, welche durch Lösen des obengenannten Gleichungssystems (Formel (VII)) den Kanal schätzt. Neben dem Empfangssignal $y(t)$ muss er auch die gesendeten Datenkoeffizienten $c_k$ kennen. Gemäss einer bevorzugten, einfachen Ausführungsform sind die zu übertragenden Datenkoeffizienten $c_k$ im voraus festgelegt. Die Schätzung des Kanals kann in diesem Fall z.B. so vor sich gehen, dass der Sender 4 die Uebermittlung der im voraus festgelegten Folge von Daten durch ein Kennsignal einleitet, so dass der Empfänger 10 auf das entsprechende, nachfolgende Empfangs-

EP 0 301 282 A1

signal vorbereitet ist. Im Vergleich mit der abgespeicherten vorgegebenen Folge von Daten wird der Kanalschätzer 8 die Koeffizienten H(i) in der oben beschriebenen Weise bestimmen. Die Matrix $R_{cc}$ kann im voraus berechnet werden und ist fest abgespeichert, so dass die Schätzung sehr schnell vor sich gehen kann. Die ermittelten Koeffizienten $\hat{H}(i)$ werden an die kanalangepassten Filter 7a, 7b und an die Auswerteschaltung 9 ausgegeben.

Bei einer anderen, bevorzugten Ausführungsform wird die vom Kanalschätzer 8 benötigte Folge von Daten nicht im voraus festgelegt, sondern laufend von der Auswerteschaltung 9 zurückgeführt. Bei einem solchen Verfahren ist es wichtig, dass die von der Auswerteschaltung 9 ermittelten Daten nur mit einer kleinen Fehlerwahrscheinlichkeit behaftet sind.

Die kanalangepassten Filter 7a, 7b haben eine Stossantwort M(t), die sich in bekannter Weise aus der Stossantwort der Filterkaskade H(t) ergibt:

$$M(t) = \overline{H}(-t) \qquad (X)$$

Sie sind als Transversalfilter mit äquidistanten Stützstellen ausgebildet. Jeder Stützstelle ist gemäss Formel (X) ein Koeffizient $\hat{H}(i)$ zugeordnet.

Einerseits soll die Länge des Sendesignals gross sein, damit die statistische Unsicherheit der Kanalschätzung klein ist, andererseits soll sie klein sein, um den Rechenaufwand klein zu halten. Der in Formel (V) auftretende, obere Index P bestimmt sich nämlich nach dem zeitlichen Abstand $\Delta T$ der Stützstellen und nach der Länge des Empfangssignals y(t). $L_c$ in Formel (VII) ist die Zahl der Stützstellen des Transversalfilters.

Die Auswerteschaltung 9 kann die gesendeten Daten z.B. mit Hilfe eines Viterbi-Algorithmus oder eines Equalizers ermitteln. Die Einzelheiten solcher Verfahren können z.B. dem eingangs genannten Buch von J.G. Proakis entnommen werden.

Man beachte, dass es in den meisten Anwendungen gar nicht nötig ist, die Kanalstossantwort h(t) selbst zu kennen. Es interessiert primär die Filterkaskade H(t) gebildet durch Pulsformer und Kanal. Ist es trotzdem einmal wichtig, die Kanalstossantwort zu kennen, dann bildet man einfach das Faltungsprodukt aus einer Schätzung der Filterkaskade H(t) und einer zur Stossantwort des Pulsformers inversen Stossantwort $r^{-1}(t)$

$$\hat{h}(t) = \hat{H} * r^{-1}(t) \qquad (XI)$$

Es ist wichtig zu bemerken, dass dieses Faltungsprodukt die durch das erfindungsgemässe Verfahren bewirkte Stabilität der Schätzung nicht zunichte macht.

Anhand eines konkreten Beispiels soll die vorteilhafte Wirkung eines erfindungsgemässen Signalübertragungsverfahren illustriert werden.

Das Signalübertragungsverfahren ist wie folgt ausgestaltet. Die Datenquellen 1a, 1b liefern binäre Daten in einem zeitlichen Abstand $T = 62.5\ \mu s$. Die Stossantwort r(t) der Pulsformer 3a, 3b ist ein Rechteckpuls der Länge T. Das Sendesignal erstreckt sich über $100 \cdot 62.5\ \mu s$. Die Kanalstossantwort h(t) erstreckt sich über 109 $\mu s$ und wird an 14 Stützstellen in einem zeitlichen Abstand $\Delta T = 7.8125\ \mu s$ geschätzt. Schliesslich lich hat das Rauschen eine Stärke von 15 dB, bezogen auf eine Leistung des Empfangssignals.

Fig. 2 zeigt eine Darstellung der tatsächlichen Kanalstossantwort.

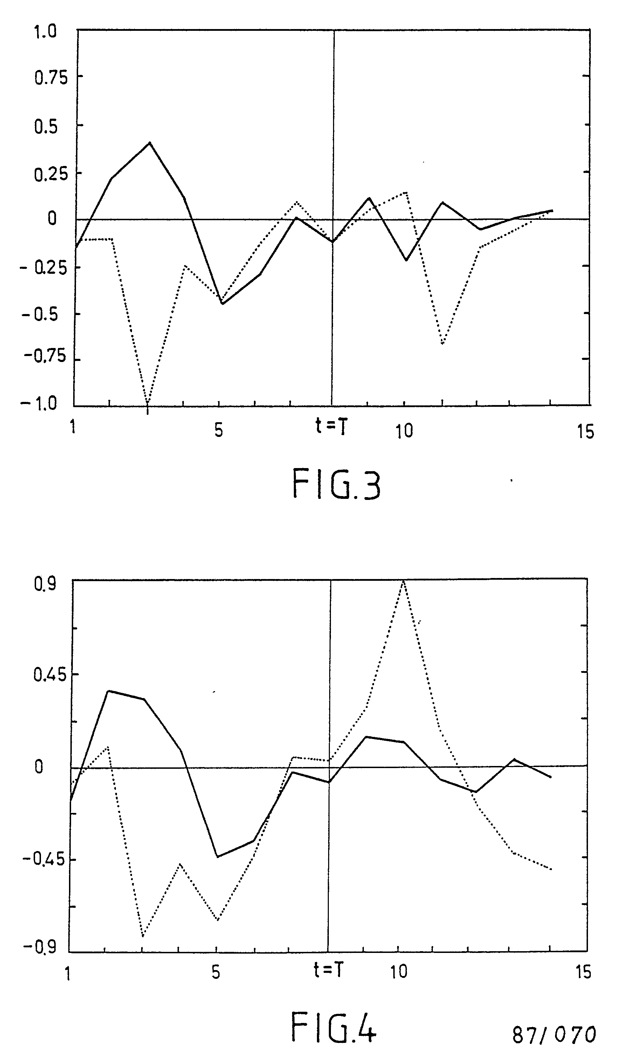

Fig. 3 zeigt eine Darstellung der erfindungsgemäss geschätzten Kanalstossantwort ($\hat{h}(t) = \hat{H} * r^{-1}(t)$).

Fig. 4 zeigt als Vergleich eine Darstellung einer Kanalstossantwort, welche nach einem bekannten Verfahren geschätzt worden ist. Es ist klar zu erkennen, dass diese Schätzung von der tatsächlichen Kanalstossantwort (Fig. 2) deutlich abweicht.

In den Darstellungen der Figuren 2 bis 4 ist auf der Abszisse die Zeit in Einheiten von $\Delta T$ und auf der Ordinate ein normierter Wert der jeweiligen Stossantwort aufgetragen. Die durchgezogenen Linien zeigen den Verlauf des Realteils und die punktierten Linien denjenigen des Imaginärteils der jeweiligen Stossantwort.

Ein Indiz für die Qualität der Kanalschätzung stellt die Konditionszahl dar. Beim erfindungsgemässen Verfahren liegt sie etwa bei 14, beim bekannten hingegen bei etwa 190. Theoretische Ueberlegungen gestützt von Versuchen zeigen, dass erfindungsgemässe Verfahren Konditionszahlen haben, die etwa der Quadratwurzel der Konditionszahlen entsprechen, welche bei bekannten Verfahren auftreten.

Als ein globales Gütekriterium kann die Summe der Fehlerquadrate zwischen tatsächlicher und geschätzter Kanalstossantwort gelten. Der Fehler

$$\Delta \hat{H} = \sum_{k=0}^{L_c} h(k\Delta T) - \hat{h}(k\Delta T)|^2 \Big/ \sum_{k=0}^{L_c} |h(k\Delta T)|^2 \qquad (XII)$$

5

beträgt beim erfindungsgemäss geschätzten Kanal der Fig. 3 etwa -7.9 dB und beim auf bekannte Weise geschätzten Kanal der Fig. 4 0.1 dB. (Vielfach ist es sogar so, dass bekannte Verfahren überhaupt kein Resultat ausgeben können.)

Mit der Erfindung liegt somit ein Signalübertragungsverfahren vor, welches auch für feinstrukturierte und kurze Kanäle eine gute Empfangsqualität ermöglicht.

## Ansprüche

1. Signalübertragungsverfahren nach dem Prinzip der Quadratur-Amplituden-Modulation, bei welchem
a) in einem Sender (4) digitale Daten, welche in einem zeitlichen Abstand T auftreten,
b) mit Hilfe von Pulsformern (3a, 3b), welche eine gegebene Stossantwort r(t) haben, zu einem Sendesignal geformt werden,
c) das Sendesignal mittels einer Trägerschwingung über einen Kanal (5) mit einer Kanalstossantwort h(t) übertragen und dabei von einem additiven, weissen Rauschen w(t) überlagert wird, so dass bei einem Empfänger (10) ein Empfangssignal y(t) vorliegt,
d) und das Empfangssignal y(t) im Empfänger (10) von kanalangepassten Filtern (7a, 7b) vorverarbeitet wird,
dadurch gekennzeichnet, dass
e) die kanalangepassten Filter (7a, 7b) an eine von Pulsformer (3a, 3b) und Kanal (5) gebildete Filterkaskade H(t) als Ganze angepasst sind.

2. Signalübertragungsverfahren nach Anspruch 1, dadurch gekennzeichnet, dass die kanalangepassten Filter (7a, 7b) Transversalfilter sind, deren Stützstellen einen zeitlichen Abstand $\Delta T$ haben, welcher klein ist im Verhältnis zum zeitlichen Abstand T der digitalen Daten.

3. Signalübertragungsverfahren nach Anspruch 2, dadurch gekennzeichnet, dass die kanalangepassten Filter (7a, 7b) Koeffizienten haben, welche nach dem Prinzip der kleinsten Fehlerquadrate zwischen Sendesignal und Empfangssignal bestimmt sind.

4. Signalübertragungsverfahren nach Anspruch 3, dadurch gekennzeichnet, dass das Sendesignal einer dem Empfänger bekannten, vorgegebenen Folge von digitalen Daten entspricht.

5. Signalübertragungsverfahren nach Anspruch 3, dadurch gekennzeichnet, dass die dem Sendesignal zugrundeliegenden Daten durch Auswerten des Empfangssignals ermittelt werden.

6. Signalübertragungsverfahren nach Anspruch 3, dadurch gekennzeichnet, dass im Empfänger (10) ein Kanalschätzer (8) die Filterkaskade H(t) periodisch schätzt.

7. Signalübertragungsverfahren nach Anspruch 6, dadurch gekennzeichnet, dass der Kanalschätzer (8) die Kanalstossantwort h(t) bestimmt, indem er eine Schätzung der Filterkaskade H(t) mit einer zur Stossantwort r(t) der Pulsformer (3a, 3b) inversen Stossantwort $r^{-1}(t)$ faltet.

FIG.1

FIG.2

87/070

FIG.3

FIG.4

87/070

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | INTERNATIONAL CONFERENCE ON COMMUNICATIONS, ICC '79, Boston, 10.-14. Juni 1979, Band 2, Seiten 25.3.1 - 25.3.5, IEEE, New York, US; C.C.W. WONG et al.: "Optimal short impulse response channels for an MLSE receiver" * Seite 25.3.2, linke Spalte, Zeilen 16-23 *  --- | 1 | H 04 L 27/02 H 04 L 25/30 |
| A | IEE PROCEEDINGS, Band 130, Nr. 5, Teil F, August 1983, Seiten 368-376, Old Woking, GB; A.P. Clark et al.: "Detection process of a 9600 bit/s serial modem for HF radio links"  ----- | | |

| | |
|---|---|
| | **RECHERCHIERTE SACHGEBIETE (Int. Cl.4)** |
| | H 04 L |

Der vorliegende Recherchenbericht wurde für alle Patentansprüche erstellt

| Recherchenort | Abschlußdatum der Recherche | Prüfer |
|---|---|---|
| DEN HAAG | 14-10-1988 | VEAUX,C.J. |